## Europäisches Patentamt

## European Patent Office

## Office européen des brevets

(19)

(11) Veröffentlichungsnummer: **0 217 367**
**B1**

(12)

# EUROPÄISCHE PATENTSCHRIFT

(45) Veröffentlichungstag der Patentschrift:
08.03.89

(51) Int. Cl.⁴: **F 16 H 39/44**, B 60 K 17/10

(21) Anmeldenummer: **86113469.0**

(22) Anmeldetag: **01.10.86**

(54) **Antriebsanlage mit zwei hydrostatischen Getrieben.**

(30) Priorität: **04.10.85 DE 3535555**
**20.08.86 DE 3628175**

(43) Veröffentlichungstag der Anmeldung:
**08.04.87 Patentblatt 87/15**

(45) Bekanntmachung des Hinweises auf die Patenterteilung:
**08.03.89 Patentblatt 89/10**

(84) Benannte Vertragsstaaten:
**DE FR GB IT SE**

(56) Entgegenhaltungen:
**EP-A-0 012 902**
**DE-A-2 152 726**
**DE-A-2 321 335**
**DE-A-3 244 615**
**DE-A-3 409 561**
**DE-C-2 247 437**

(73) Patentinhaber: **Hydromatik GmbH,**
**Glockeraustrasse 2, D-7915 Elchingen 2 (DE)**

(72) Erfinder: **Appel, Wilhelm, St. Florianweg 7, D-7900**
**Ulm- Donaustetten (DE)**

(74) Vertreter: **Körber, Wolfhart, Dr., Patentanwälte**
**Dipl.- Ing. H. Mitscherlich Dipl.- Ing. K.**
**Gunschmann Dr.rer.nat. W. Körber Dipl.Ing. J.**
**Schmidt- Evers Dipl.- Ing. W. Melzer**
**Steinsdorfstrasse 10, D-8000 München 22 (DE)**

## Beschreibung

Die Erfindung bezieht sich auf eine Antriebsanlage nach dem Oberbegriff des Anspruchs 1.

Derartige Antriebsanlagen ermöglichen eine stufenlose Veränderung des Übersetzungsverhältnisses der Getriebe für einen großen Über- bzw. Untersetzungsbereich und bei Anwendung auf Fahrzeuge sowohl bei Geradeaus-als auch bei Kurvenfahrt optimale Lenk- und Fahrbedingungen.

Eine Antriebsanlage der eingangs bezeichneten Art ist in DE-OS-2 152 726 beschrieben und dargestellt. Bei dieser Ausgestaltung werden die die Servostellgeräte beaufschlagenden Steuerdrücke durch verstellbare Steuerdruck-Geberventile eingestellt, die durch ein Steuerorgan verstellbar sind, bei dem es sich bei einem Gleisketten-oder Raupenfahrzeug um ein Element zur Geschwindigkeitskontrolle und/oder ein Lenkelement handelt.

Die bekannte Ausgestaltung ist deshalb mit einem Nachteil behaftet, weil die jeweils bemessenen Fördermengen der Pumpen nur theoretisch den gewünschten Werten entsprechen. In Wirklichkeit ergeben sich die Drehzahl des jeweiligen Getriebes oder die Geschwindigkeit bei einem Fahrzeug hervorrufende Fördermengen der Pumpen, die von den gewünschten Werten abweichen. Dieser Mangel beruht auf mit vertretbaren Mitteln nicht völlig zu vermeidenden Fehlerquellen in der Charakteristik der Fördermengenbemessung, die hauptsächlich durch die Bewegung der Servostellgeräte bestimmt ist. Im einzelnen handelt es sich um Sollwertabweichungen, die auf Herstellungs-Toleranzen beruhen, z. B. unterschiedliche Spannungen vorhandener Federn und unterschiedliche Abmessungen, insbesondere der Steuerkanten der Geberventile in den Servostellgeräten, unterschiedliche Reibungsverluste der beweglichen Teile des Getriebes, insbesondere der Servorstellgeräte, unterschiedliche Fördermengen aufgrund Herstellungstoleranzen und/oder Leckverlusten der Pumpen und dergleichen mehr. Auch unterschiedliche Schluckvolumina der Hydromotoren aufgrund Herstellungstorleranzen und/oder Leckverlusten tragen zu den vorbeschriebenen Fehlerquellen bei.

Der vorbeschriebene Mangel macht sich bei der bekannten Ausgestaltung dadurch bemerkbar, daß die Abtriebsdrehzahlen der Getriebe nicht exakt den gewünschten Werten entsprechen. Dies ist im Fahrbetrieb deshalb weniger tragisch, weil die sich ergebende Fahrtrichtung durch das Lenkmittel korrigiert werden kann. Probleme ergeben sich im Fahrbetrieb dann, wenn das Lenkelement in einer der Geradeausfahrt entsprechenden Stellung fixierbar ist, weil bei der bekannten Ausgestaltung davon auszugehen ist, daß in dieser Stellung des Lenkmittels das Fahrzeug nicht exakt geradeaus fährt.

Der Mangel der bekannten Ausgestaltung macht sich insbesondere beim Anfahren bemerkbar und äußerst sich bei einem Fahrzeug durch einen seitlichen Ruck, weil die Antriebselemente des Fahrzeugs unterschiedlich beaufschlagt werden.

Der Erfindung liegt die Aufgabe zugrunde, eine Antriebsanlage der eingangs bezeichneten Art so auszugestalten, daß vorzugsweise beim Anfahren möglichst gleiche Abtriebswerte der Getriebe erreicht werden.

Diese Aufgabe wird durch die kennzeichnenden Merkmale des Anspruchs 1 gelöst.

Die erfindungsgemäße Ausgestaltung weist ein Regulativ auf, das die Beaufschlagung des Servostellgerätes wenigstens eines Getriebes unter Berücksichtigung der vorerwähnten, unterschiedlichen Abtriebswerte an den Getrieben hervorrufenden Fehlerquellen korrigiert. Infolgedessen ergeben sich gleiche Abtriebswerte an den Getrieben, so daß bei Anwendung der Erfindung an einem Fahrzeug die Fahrtrichtung bzw. Fahrgeschwindigkeit den am betreffenden Einstellelement eingestellten Werten entspricht. Beim Anfahren ergibt sich bei der erfindungsgemäßen Ausgestaltung kein seitlicher Ruck, weil die Antriebselemente (Ketten, Räder) des Fahrzeugs gleichmäßig beaufschlagt werden. Dabei zeichnet sich die erfindungsgemäße Lösung nicht nur durch Funktionssicherheit, sondern auch durch Einfachheit aus.

Erfindungsgemäß wird das Regulativ durch ein Differenzdruckventil gebildet, das zwecks Ausgleich von auf Sollwertabweichungen beruhenden unterschiedlichen Abtriebswerten der Getriebe im Sinne einer entsprechenden Druckveränderung in wenigstens einer der Steuerdruckleitungen eingestellt ist. Aufgrund der Einstellbarkeit des Differenzdruckventils lassen sich die vorhandenen Fehlerquellen deshalb in einfacher Weise berücksichtigen, weil das Differenzdruckventil in montierter Position, d. h. an Ort und Stelle der vorhandenen Fehlerquellen eingestellt werden kann.

Die vom Differenzdruckventil eingestellte Steuerdruckdifferenz kann je nach Fehlerquelle konstant oder auch unterschiedlich sein. Die Ausgestaltung nach Anspruch 2 ermöglicht zum einen mit einfachen Mitteln eine Feineinstellung des Differenzdruckventils und zum anderen eine einfache Anpassung an unterschiedliche Druckdifferenzen und Federkräfte.

Die im Anspruch 3 enthaltene Ausgestaltung stellt ein Differenzdruckventil einfacher Bauart dar, das den Steuerdruck einer der jeweils in Funktion stehenden beiden Steuerdruckleitungen korrigiert.

Bei der Ausgestaltung nach Anspruch 4 ist das Differenzdruckventil in der gemeinsamen Steuerdruckleitung angeordnet, wobei ein doppelt wirkendes Differenzdruckventil vorgesehen ist, das gleichzeitig als Strom- bzw.

Druckteiler wirkt. Bei dieser Lösung können beide Steuerdrücke in beiden jeweils in Funktion stehenden Steuerdruckleitungen korrigiert werden.

Die im Anspruch 5 enthaltenen Ausgestaltungsmerkmale führen zu einem doppelt wirksamen Differenzdruckventil einfacher und praktischer Bauart.

Aufgrund der Ausgestaltung gemäß Anspruch 6 ist es am Differenzdruckventil möglich, eine Korrektur des Steuerdruckstroms vorzunehmen, die den auf unterschiedlichen Federkennlinien beruhenden Abweichungen von der Soll-Förder- bzw. Schluckvolumeneinstellung entspricht, so daß letztlich die Förder- bzw. Schluckvolumeneinstellung dem Sollwert bzw. zumindest einem Mittelwert vorhandener Sollwert-Abweichungen entspricht. Dies wird durch ein Regulativ erreicht, daß den Steuerdruck in eine mechanische Arbeit umwandelt und diese Arbeit hinsichtlich ihres Weg-Faktors übersetzt. D. h., es ist nicht nur die Kraft, die in der Feder entgegengesetzter Richtung am Kolbenschieber des Differentialdruckventils wirkt, sondern auch dessen der Feder entgegengesetzter Steuerweg variierbar, wodurch der Ausgleich in der Förder- bzw. Schluckvolumeneinstellung zumindest nahezu erreicht wird. Aufgrund der Verstellbarkeit des Übersetzungsgetriebes ist es möglich, das erfindungsgemäß ausgestaltete Differenzdruckventil an Ort und Stelle der vorhandenen, auf unterschiedlicher Steigung der Federkennlinien beruhende Abweichungen der Förder- bzw. Schluckvolumeneinstellung zumindest nahezu aufzuheben. Werden bei der Förder- bzw. Schluckvolumeneinstellung mehrere Federn verwendet, dann ergibt sich ein Fehler-Mittelwert, der durch das erfindungsgemäße Differentialdruckventil ausgeglichen werden kann.

Die Ausgestaltungen nach den Ansprüchen 7 bis 9 führen zu einfachen und praktischen Ausführungsformen der verstellbaren Übersetzungseinrichtung in Form eines Hebelgetriebes.

Die in den Ansprüchen 10 bis 12 enthaltenen Merkmale führen zu einer einfachen Bauart des Differenzdruckventils, wobei gemäß den Ansprüchen 11 und 12 eine Mittelzentrierung des Kolbenschiebers erreicht wird.

Nachfolgend wird die Erfindung anhand von in vereinfachten Zeichnungen dargestellten bevorzugten Ausführungsbeispielen näher erläutert. Es zeigt

Fig. 1  einen Schaltplan für eine erfindungsgemäß ausgestaltete Antriebsanlage als erstes Ausführungsbeispiel;

Fig. 2  ein Differenzdruckventil gemäß Fig. 1 in vergrößerter Darstellung;

Fig. 3  einen Schaltplan für eine erfindungsgemäß ausgestaltete Antriebsanlage als weiteres Ausführungsbeispiel;

Fig. 4  ein Differenzdruckventil gemäß Fig. 3 in vergrößerter Darstellung;

Fig. 5  einen Schaltplan für eine erfindungsgemäß ausgestaltete Antriebsanlage als weiteres Ausführungsbeispiel;

Fig. 6  ein Differenzdruckventil gemäß Fig. 5 in vergrößerter Darstellung;

Fig. 7  unterschiedliche Federkennlinien anhand eines Schaubildes;

Fig. 8  eine weitere Ausgestaltung für ein Differenzdruckventil gemäß Fig. 5 im Schnitt und in vergrößerter Darstellung als weiteres Ausführungsbeispiel.

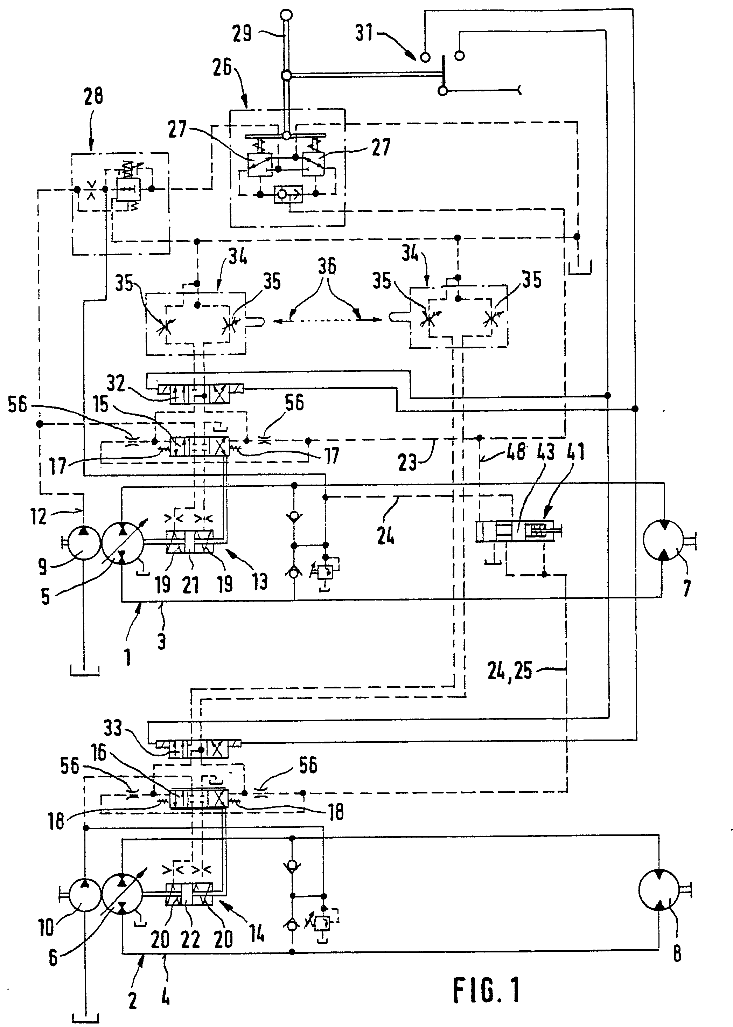

Die in Fig. 1 nur schematisch dargestellte Antriebsanlage weist zwei hydrostatische Getriebe 1, 2 mit geschlossenen Kreisläufen 3, 4 auf, in denen jeweils eine Pumpe 5, 6 verstellbarer Fördermenge und wahlweise umkehrbarer Förderrichtung sowie ein Hydromotor 7, 8 wahlweise wechselnder Drehrichtung angeordnet sind. Die Pumpen 5, 6 werden durch einen gemeinsamen, nicht dargestellten Antriebsmotor angetrieben, der auch zwei Hilfspumpen 9, 10 antreibt, von denen jede einen jedem Getriebe 1, 2 zugeordneten Steuerkreis 12 versorgt.

Jeder Pumpe 5, 6 ist ein Servostellgerät 13, 14 zugeordnet, das durch ein federzentriertes 4/3-Wegeventil 15, 16 ansteuerbar ist, deren Federn mit 17, 18 bezeichnet sind. Die Servostellgeräte 13, 14 werden durch einen Hydraulikzylinder mit einem doppelt wirksamen, durch Federn 19, 20 mittenzentrierten Kolben 21, 22 gebildet, der die jeweilige Pumpe 5, 6 zwecks Veränderung der Fördermenge und der Förderrichtung beaufschlagt.

Jedes 4/3-Wegeventil 15, 16 ist an einer eigenen Steuerdruckleitung 23, 24 angeschlossen, von denen in der Steuerdruckleitung 23 der Sekundärdruck eines Druckreduzierventils 26 im Steuerkreis 12 und in der Steuerdruckleitung 24 der Primärdruck des Steuerkreises 12 herrscht. Dem Druckreduzierventil 26 ist ein allgemein mit 28 bezeichnetes Steuerventil vorgeordnet, dessen Aufbau und Anordnung dem in DE-PS-2 247 437 beschriebenen Steuerventil entspricht.

Die vorliegende Antriebsanlage ist für den Antrieb der beiden Ketten eines kettengetriebenen Baufahrzeugs vorgesehen. Jedes Getriebe 1, 2 treibt eine nicht dargestellte Kette an. Zur Einstellung der Fahrgeschwindigkeit ist ein in zwei Richtungen bewegbares Steuerelement 29 vorgesehen, das in das Druckreduzierventil 26 integriert ist und Steuerdruck-Geberventile 27 zu beaufschlagen vermag. Das Steuerelemente 29 steht mit einem elektrischen Schalter 31 in Verbindung, der die elektrische Beaufschlagung entsprechend den beiden Bewegungsrichtungen des Steuerelementes 29 von zwei 4/3-Wegeventilen 32, 33 steuert, von denen jeweils ein jedem 4/3-

Wegeventil 15, 16 zur Vorwahl der Vorwärts- bzw. Rückwärtsfahrt zugeordnet ist.

Die Steuerdrücke in den Steuerdruckleitungen 23, 24 sind unabhängig vom Druckreduzierventil 26 durch jeweils ein Steuerventil 34 mit verstellbaren Drosseln 35 im Ablauf des Steuerkreises 12 und durch ein mit den verstellbaren Drosseln 35 zusammenwirkendes, andeutungsweise dargestelltes Lenkelement 36 zwecks Verwirklichung von Kurvenfahrten steuerbar. Hierzu werden die Servostellgeräte 13, 14 unterschiedlich verstellt, so daß sich am Abtrieb der Getreibe 1, 2 unterschiedliche Drehzahlen ergeben, wodurch eine entsprechende Kurvenfahrt des Fahrzeugs bewirkt wird.

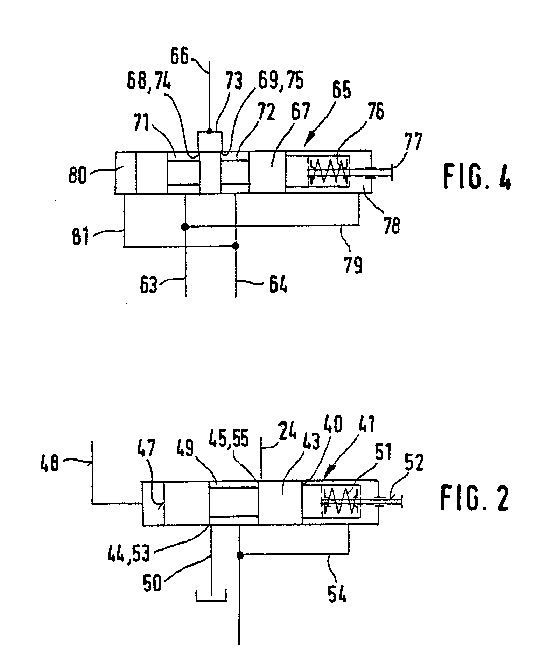

In der Steuerdruckleitung 24, die bei der vorliegenden Ausgestaltung den höheren Steuerdruck (Primärdruck) enthält, ist ein Differenzdruckventil 41 angeordnet, das, wie die vergrößerte Darstellung in Fig. 2 deutlich zeigt, durch einen in einem Zylinder 42 verschiebbaren Kolbenschieber 43 mit zwei Steuerkanten 44, 45 gebildet ist. Die eine Stirnfläche des Kolbenschiebers 43 stellt eine Meßfläche 47 dar, die durch eine mit der Steuerdruckleitung 23 verbundene Leitung 48 mit dem in der Steuerdruckleitung 23 herrschenden Steuerdruck beaufschlagt ist. An die zwischen den Steuerkanten 44, 45 vorhandene Kolbenausnehmung 49 sind die Steuerdruckleitung 24 und eine Ablaufleitung 50 angeschlossen, die mit den Steuerkanten 44, 45 verstellbare Drosseln 53, 55 bilden. Gegen die der Meßfläche 47 gegenüberliegende Stirnfläche 40 des Kolbens 43 wirkt eine Druckfeder 51, deren Vorspannung durch ein Stellelement 52 wahlweise verringert oder vergrößert werden kann. Der vor dieser Stirnfläche 40 des Kolbenschiebers 43 vorhandene und die Druckfeder 51 aufnehmende Arbeitsraum ist durch eine Leitung 54 mit der Steuerdruckleitung 24 verbunden, so daß auf die Stirnfläche 40 der Steuerdruck der Steuerdruckleitung 24 wirkt. Es ist noch nachzutragen, daß die Steuerdruckleitungen 23, 24 über Drosseln 56 an die 4/3-Wegeventile 15, 16 angeschlossen sind.

Es ist der Zweck des Differenzdruckventils 41, einen Differenzdruck zwischen dem in der Leitung 24 herrschenden Primärdruck sowie im zum 4/3-Wegeventil führenden Steuerdruckleitungsabschnitt 25 der Steuerdruckleitung 24 herrschenden Steuerdruck und somit eine Korrektur des Differenzdrucks zwischen den Steuerdruckleitungen 23, 25 zu schaffen. Die Druckdifferenz zwischen den Steuerdrücken ist durch Veränderung der Vorspannung der Druckfeder 51 mittels des Stellelementes 52 wahlweise veränderlich.

Durch die Korrektur der Steuerdruckdifferenz lassen sich auf Sollwertabweichungen beruhende Fehler bei der Fördermengenbemessung der Pumpen 5, 6 und auch beim Antrieb der Hydromotoren 7, 8 ausgleichen. Es handelt sich um mit vertretbaren Mitteln nicht völlig vermeidbare Sollwertabweichungen, z. B. unterschiedliche mechanische und hydraulische Reibungsverluste in den Servostellgeräten 13, 14, insbesondere deren Steuerschiebern, sowie in den Pumpen 5, 6 und Hydromotoren 7, 8, unterschiedliche Federspannungen der Federn 17 bis 20, unterschiedliche Abmessungen der Steuerkanten der Steuerschieber auch im Rahmen von Toleranzen, unterschiedliche Fördermengen der Pumpen 5, 6 und unterschiedliche Schluckvolumen der Hydromotoren 7, 8 aufgrund von Maßtoleranzen und Leckverlusten. Die sich durch die Sollwertabweichungen ergebenden Unterschiede der Abtriebswerte wie Drehzahlen der Getreibe 1, 2 können je nach Art der Sollwertabweichungen oberhalb oder unterhalb des gewünschten (theoretischen) Wertes liegen. Der Verstellbereich des Differenzdruckventils 41 ist so ausgelegt, daß sowohl oberhalb als auch unterhalb der gewünschten Werte sich ergebende Abtriebswerte korrigiert werden können. Die durch das Druckreduzierventil 26 vorgegebene Druckdifferenz zwischen den Steuerdruckleitungen 23, 24 ist somit durch das Differenzdruckventil 41 sowohl verringerbar als auch vergrößerbar. Die Einstellung des Differenzdruckventils 41 erfolgt in montierter Position. Es können somit alle Sollwertabweichungen berücksichtigt und ausgeglichen werden.

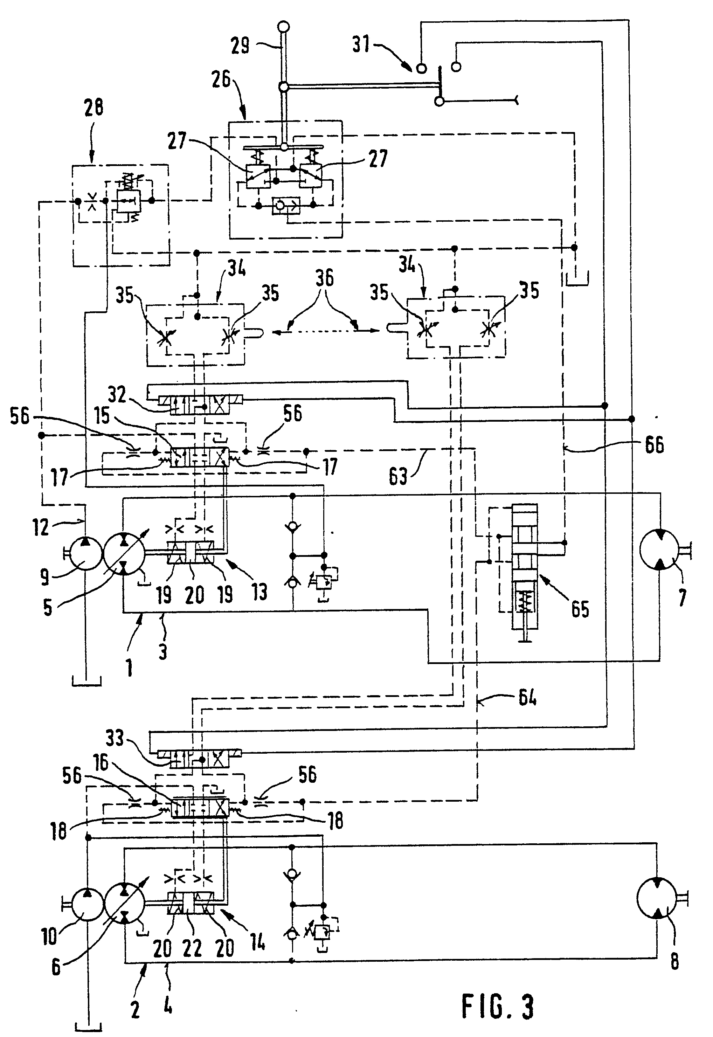

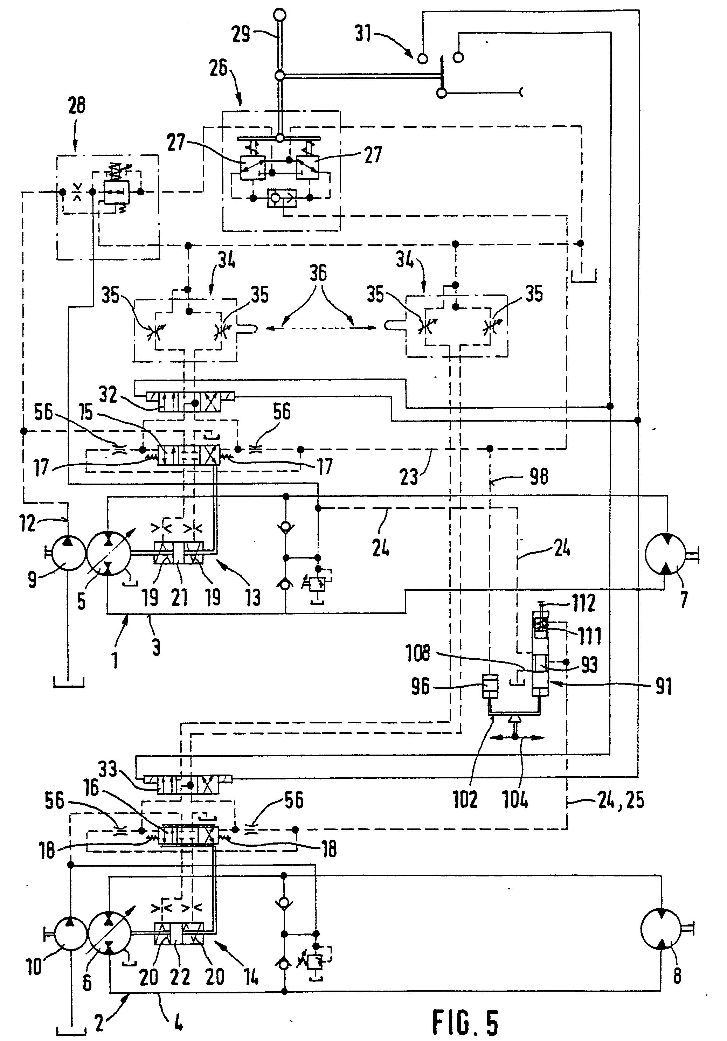

Die Ausgestaltung nach den Fig. 3 und 4 unterscheidet sich von der vorbeschriebenen dadurch, daß die zu den Servostellgeräten 13, 14 führenden Steuerdruckleitungen 63, 64 über ein doppelt wirkendes Differenzdruckventil 65 an eine gemeinsame Steuerdruckleitung 66 angeschlossen sind. Abgesehen von der durch das Differenzdruckventil 65 erzielbare Korrektur werden die Servostellgeräte 13, 14 folglich mit ein und dem selben Steuerdruck beaufschlagt.

Wie Fig. 4 deutlich zeigt, weist der Kolbenschieber 67 des Differenzdruckventils 65 zwei Steuerkanten 68, 69 auf, die sich an einander entgegengesetzten radialen Flächen von Kolbenschieberausnehmungen 71, 72 ergeben. Im Bereich der Steuerkanten 68, 69 sind die Kolbenschieberausnehmungen 71, 72 über eine Zweigleitung 73 an die gemeinsame Steuerdruckleitung 66 angeschlossen, wobei sich im Bereich der Leitungsmündungen der Zweigleitung 73 veränderliche Drosselstellen 74, 75 ergeben. Außerdem sind die Kolbenschieberausnehmungen 71, 72 durch die Steuerdruckleitungen 63, 64 mit den Servostellgeräten 13, 14 verbunden. Auch bei dieser Ausgestaltung ist der Kolbenschieber 67 auf der einen Seite durch eine Druckfeder 76 beaufschlagt, deren Spannung durch ein Stellelement 77 sowohl verringert als auch vergrößert werden kann. Auf dieser Seite ist der vorhandene Arbeitsraum 78 durch eine Leitung 79 mit der Steuerdruckleitung 63 verbunden. Der auf der anderen Seite des Kolbenschiebers 67 vorhandene Arbeitsraum 80 ist durch eine Leitung 81 mit der Steuerdruckleitung 64 verbunden. Das Differenzdruckventil 65 wirkt somit im Sinne eines Strom- bzw. Druckteilers.

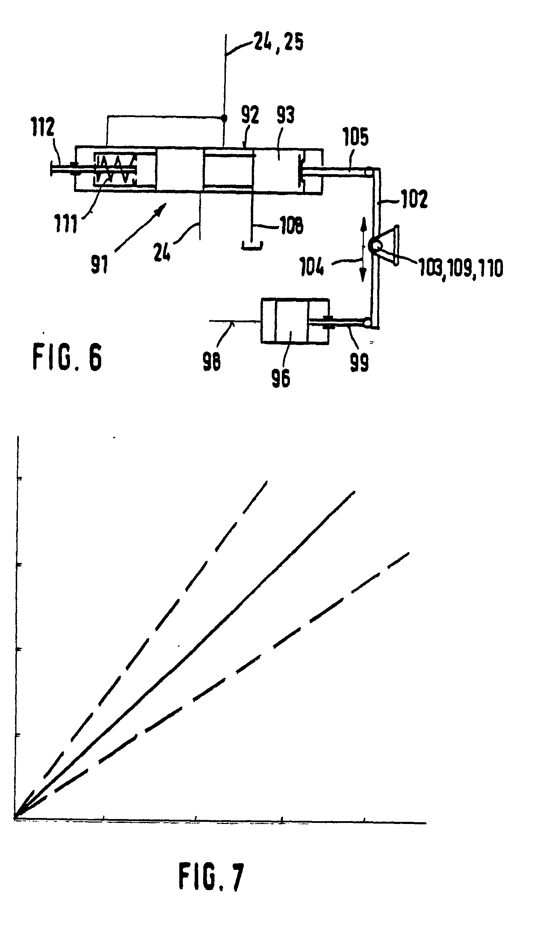

Gemäß Fig. 5 und 6 wird das mit 91 bezeichnete Differenzdruckventil durch einen in einem Zylinder 92 verschiebbaren Kolbenschieber 93 mit einer Steuerkante 94 gebildet, die mit einer Steuerkante 95 am Gehäuse 92 zusammenwirkt und eine verstellbare Drossel bildet. Dem Differenzdruckventil 91 ist ein Kolben 96 zugeordnet, dessen Meßfläche 97 durch einen mit der Steuerdruckleitung 23 verbundenen Steuerleitungsabschnitt 98 mit dem Steuerdruck der Steuerdruckleitung 23 beaufschlagbar ist. Der Kolben 96 wirkt mit einer Kolbenstange 99 auf den einen Hebelarm 101 eines doppelarmigen Hebels 102, der mit seiner Lagerstelle 103 längs des Doppelpfeiles 104 verstellbar ist. Gegen den anderen Hebelarm 100 wirkt der Kolbenschieber 93 mit einer Kolbenstange 105. Im Bereich der beiderseits der Steuerkante 94 vorhandener Kolbenausnehmungen 106, 107 sind der Abschnitt 25 der Steuerdruckleitung 24 und eine Ablaufleitung 108 angeschlossen.

Am dem Hebel 102 gegenüberliegenden Ende des Kolbenschiebers 93 spannt eine Druckfeder 111, deren Vorspannung durch ein Stellelement 112 wahlweise verringert oder vergrößert werden kann, den Kolbenschieber 93 gegen den Hebelarm 102 vor. Der diesem Ende des Kolbenschiebers 93 zugeordnete und die Druckfeder 111 aufnehmende Arbeitsraum 113 ist durch Öffnungen 114 mit dem Abschnitt 25 der Steuerdruckleitung 24 verbunden, der den mittels des Differenzdruckventils 91 geregelten Steuerdruck enthält, so daß auf die sich aus den Stirnflächenabschnitten 116 und 117 zusammensetzende Stirnfläche des Steuerschiebers 93 der geregelte Steuerdruck des Steuerdruckleitungsabschnitts 25 wirkt. Es ist noch nachzutragen, daß die Steuerdruckleitung 23 und der Steuerdruckleitungsabschnitt 25 über Drosseln 56 an die 4/3-Wegeventile 15, 16 angeschlossen sind.

Der Hebel 102 ist auf einem Exzenter 109 einer im Gehäuse des Differenzdruckventils 91 gelagerten Welle 110 gelagert. Durch ein Drehen der Welle 110 läßt sich die Lagerstelle 103 in einfacher Weise längs des Doppelpfeils 104 verstellen.

Die Druckfeder 111 ist mittels gleitbar angeordneten Stützringen 118, 119 zwischen zwei Schultern des Kolbenschiebers 93 eingespannt. Im drucklosen Zustand liegen die Stützringe 118, 119 an zwei Innenschultern 121, 122 einer die Druckfeder 111 umgebenden Hülse 123 an, die mit dem Stellelement 112 in Form einer Gewindespindel einstückig verbunden ist. Je nach Betriebszustand kann der Steuerschieber 93 in der Hülse 123 so verschoben werden, daß entweder die Kolbenschulter 124 vom Stützring 118 und der Stützring 119 von der Innenschulter 122 oder die Kolbenschulter 125 vom Stützring 119 und der Stützring 118 von der Innenschulter 121 abgehoben werden.

Wie schon beim Ausführungsbeispiel gemäß Fig. 1 und 2 ist es auch hier der Zweck des Differenzdruckventils 91, einen Differenzdruck zwischen dem in der Steuerdruckleitung 23 herrschenden Primärdruck sowie dem im zum 4/3-Wegeventil 16 führenden Steuerdruckleitungsabschnitt 25 der Steuerdruckleitung 24 herrschenden Steuerdruck und somit eine Korrektur des Differenzdrucks zwischen den Steuerdruckleitungen 23, 25 zu schaffen. Diese Druckdifferenz ist durch Veränderung der Vorspannung der Druckfeder 111 mittels des Stellelementes 112 wahlweise veränderlich.

Durch eine Verstellung des Hebels 102 längs des Doppelpfeiles 104 lassen sich aufgrund unterschiedlicher Kennliniensteigungen der Federn 17, 18, 19 und 20 beruhende Abweichungen der Förder- bzw. Schluckvolumeneinstellung korrigieren. In Fig. 7 sind zwecks Verdeutlichung Kennlinien von Federn mit unterschiedlichen Steigungen dargestellt.

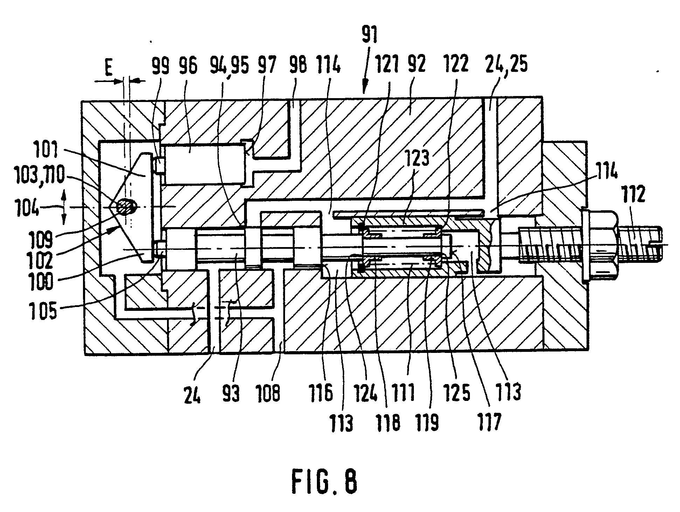

Eine einfache und schnell durchführbare Grundeinstellung des Antriebes, insbesondere der Differenzdruckventile 41, 65, 91 kann durch Vergleich der Abtriebsdrehzahlen der Getriebe 1, 2 erfolgen. Hierzu werden die Abtriebsdrehzahlen gemessen und das jeweilige Differenzdruckventil 41, 65, 91 im Sinne einer Erhöhung oder Verringerung der jeweiligen Federspannung solange verstellt, bis die Abtriebsdrehzahlen gleich sind. Dabei ist beim Differenzdruckventil 91 gemäß Fig. 5 bis 8 gegebenenfalls das Stellelement 112 und der Exzenter 109 entsprechend zu verstellen.

## Patentansprüche

1. Antriebsanlage mit zwei von einem gemeinsamen Antriebsmotor bzw. von mehreren im festen Drehzahlverhältnis zueinander stehenden Antriebsmotoren getriebenen hydrostatischen Getrieben (1, 2), von denen jedes eine Pumpe (5, 6) und einen Hydromotor (7, 8) aufweist und die Förder- bzw. Schluckvolumeneinstellung der Pumpen (5, 6) und/oder der Hydromotoren (7, 8) mit hydraulischen Servostellgeräten (13, 14) erfolgt, deren in den Steuerdruckleitungen (23, 24; 63, 64) vorhandene Steuerdrücke unabhängig voneinander bzw. gemeinsam willkürlich veränderbar sind mittels jedem Getriebe (1, 2) zugeordneten, von einer Hilfsdruckquelle (9, 10) versorgten Steuerdruckgeberventilen (27), gekennzeichnet durch ein mit den Steuerdruckleitungen (23, 24, 25; 63, 64) verbundenes einstellbares Differenzdruckventil (41; 65; 91), das wenigstens einen der die Servostellgeräte (13, 14) zugleich beaufschlagenden Steuerdrücke in Abhängigkeit vom anderen Steuerdruck korrigiert und somit unter Berücksichtigung der Fehlerquellen eine unterschiedliche Beaufschlagung der Servostellgeräte (13, 14) bewirkt.

2. Antriebsanlage nach Anspruch 1, dadurch gekennzeichnet, daß das Differenzdruckventil (41; 65; 91) einen von einer Feder (51; 76; 111) beaufschlagten Kolbenschieber (43; 67; 93) aufweist und die Beaufschlagungskraft der Feder (51; 76; 111) einstellbar ist.

3. Antriebsanlage nach Anspruch 2, dadurch gekennzeichnet, daß zwischen den Steurdruckleitungen (23, 24, 25) ein Druckreduzierventil (26) angeordnet ist, daß das Differenzdruckventil (41) in einer der beiden für eine Fahrtrichtung jeweils wirksamen Steuerdruckleitungen (23, 24) angeordnet ist, daß eine der Wirkrichtung der Feder (51) entgegengesetzt wirksame Meßfläche (47) des Kolbenschiebers (43) über eine Leitung (48) mit dem Steuerdruck in der anderen Steuerdruckleitung (23) beaufschlagt ist, daß eine in Wirkrichtung der Feder (51) wirksame Fläche (40) des Kolbenschiebers (43) durch eine Leitung (54) mit dem Steuerdruck der einen Steuerdruckleitung (24, 25) beaufschlagt ist, und daß der Kolbenschieber (43) zwei Steuerkanten (44, 45) zur Querschnittssteuerung der einen Steuerleitung (24) und einer Ablaufleitung (50) aufweist.

4. Antriebsanlage nach Anspruch 2, dadurch gekennzeichnet, daß das Differenzdruckventil (65) durch einen Strom-oder Druckteiler gebildet ist.

5. Antriebsanlage nach Anspruch 4, dadurch gekennzeichnet, daß der Kolbenschieber (67) des Differenzdruckventils (65) zwei Steuerkanten (68, 69) an zwei in einander entgegengesetzte Richtungen weisende Flächen aufweist, daß diese Steuerkanten (68, 69) mit zwei Anschlußstellen einer mit dem Steuerkreis (12) verbundenen Zweigleitung (73) Drosselstellen (74, 75) bilden, daß jede Steuerdruckleitung (63, 64) mit einer Drosselstelle (74, 75) verbunden ist, und daß jede Steuerdruckleitung (63, 64) mit einem von zwei einander entgegengesetzt wirksamen, stirnseitigen Arbeitsräumen (78, 80) des den Kolbenschieber (67) aufnehmenden Zylinders verbunden sind.

6. Antriebsanlage nach einem der Ansprüche 2 bis 5, dadurch gekennzeichnet, daß dem Differenzdruckventil (91) ein vom Druck in wenigstens einer Steuerdruckleitung (23) beaufschlagbarer Kolben (96) zugeordnet ist, der mittels einer verstellbaren Übersetzungseinrichtung (102) in der der Feder (111) entgegengesetzten Richtung auf den Kolbenschieber (93) wirkt.

7. Antriebsanlage nach Anspruch 6, dadurch gekennzeichnet, daß die Übersetzungseinrichtung ein Hebelübersetzer mit verstellbarer Lagerstelle (103) ist.

8. Antriebsanlage nach Anspruch 7, dadurch gekennzeichnet, daß der Hebelübersetzer ein doppelarmiger Hebel (102) ist, an dessen einen Hebelarm (101) der Kolben (96) und an dessen anderen Hebelarm (102) der Kolbenschieber (93) angreift.

9. Antriebsanalge nach Anspruch 7 oder 8, dadurch gekennzeichnet, daß der Hebelübersetzer auf einem Exzenter (109) einer drerbaren Welle (110) gelagert ist.

10. Antriebsanlage nach einem der Ansprüche 6 bis 9, dadurch gekennzeichnet, daß zwischen den Steuerdruckleitungen (23, 24) ein Druckreduzierventil (26) angeordnet ist, daß das Differenzdruckventil (91) in einer der beiden für eine Fahrtrichtung jeweils wirksamen Steuerdruckleitungen (23, 24) angeordnet ist, daß der Kolben (96) durch eine Leitung (98) mit dem Steuerdruck in der anderen Steuerdruckleitung (23) beaufschlagbar ist und daß eine in Wirkrichtung der Feder (111) wirksame Fläche (116 und 117) des Kolbenschiebers (93) durch eine Leitung (114) mit dem geregelten Druck in der einen Steuerdruckleitung (24, 25) beaufschlagbar ist.

11. Antriebsanlage nach einem der Ansprüche 6 bis 10, dadurch gekennzeichnet, daß der Kolbenschieber (93) durch die Feder (111) am deren Beaufschlagungskraft bzw. deren Position verstellenden Verstellelement (112, 123) mittenzentriert ist.

12. Antriebsanlage nach Anspruch 11, dadurch gekennzeichnet, daß die Feder (111) eine Druckfeder ist, die mittels Gleitringen (118, 119) zwischen zwei einander gegenüberliegenden Schultern (124, 125) des Kolbenschiebers (93) eingespannt ist, wobei die Gleitringe (118, 119) axial zwischen Schultern (121, 122) des Verstellelementes (112, 123) gehalten sind.

## Claims

1. A drive system with two hydrostatic transmissions (1, 2) driven by a common driving motor or by a plurality of driving motors having a fixed drive speed ratio, each having a pump (5, 6) and a hydro-motor (7, 8) and in which the displacement and swept volume setting of the pumps (5, 6) and/or the hydro-motors (7, 8) occurs by means of hydraulic servo regulators (13, 14) of which the control pressures in the control pressure lines (23, 24; 63, 64) can be adjusted as desired either independently or together by means of control pressure transmitting valves (27) associated with each transmission (1, 2) and supplied by an auxiliary pressure source (9, 10), characterised by an adjustable differential pressure valve (41; 65; 91) connected to the control pressure lines (23, 26, 25; 63, 64), which corrects at least one of the control pressures acting simultaneously on the servo regulators (13, 14) depending on the other control pressure and thus, while taking into consideration the sources of errors, effects different action on the servo regulators (13, 14).

2. A drive system according to claim 1, characterised in that the differential pressure valve (41; 65, 91) comprises a piston slide (43; 67; 93) acted on by a spring (51; 76; 93) and in that the force exerted by the spring (51; 76; 93) is adjustable.

3. A drive system according to claim 2, characterised in that a pressure reducing valve (26) is arranged between the control pressure lines (23, 24, 25), that the differential pressure valve (41) is arranged in one of the two control pressure lines (23, 24) operating for the respective directions of travel, that a measuring surface (47) of the piston slide (43) for pressure opposite to the direction of action of the spring (51) is acted on via a line (48) by the control pressure in the other control pressure line (23), that a surface (40) of the piston slide (43) for measuring pressure in the direction of action of the spring (51) is acted on by the control pressure in one control pressure line (24, 25), and that the piston slide (43) comprises two control edges (44, 45) adapted to control the cross-section of the one control line (24) and of a drain line (50).

4. A drive system according to claim 2, characterised in that the differential pressure valve (65) is a flow or pressure divider.

5. A drive system according to claim 4, characterised in that the piston slide (67) of the differential pressure valve (65) has two control edges (68, 69) on surfaces facing in two opposite directions, that these control edges (68, 69) form restrictors (74, 75) with two connections of a branch line (73) connected to the control circuit (12), that each control pressure line (63, 64) is connected to a restrictor (74, 75) and that each control pressure line (63, 64) is connected to one of two oppositely operating working spaces (78, 80) at the ends of the cylinder accommodating the piston slide (67).

6. A drive system according to any one of claims 2 to 5, characterised in that the differential pressure valve (91) is associated with a piston (96) that can be acted on by the pressure in at least one control pressure line (23) and acts via an adjustable transmission device (102) on the piston slide (93) in the opposite direction to the spring (111).

7. A drive system according to claim 6, characterised in that the transmission device is a transmission lever with an adjustable fulcrum (103).

8. A drive system according to claim 7, characterised in that the transmission lever is a two-armed lever (102) on which the piston engages one arm (101) and the piston slide (93) engages the other arm (102).

9. A drive system according to claim 7 or claim 8, characterised in that the transmission lever is mounted on an eccentric (109) of a rotatable shaft (110).

10. A drive system according to any one of claims 6 to 9, characterised in that a pressure reducing valve (26) is arranged between the control pressure lines (23, 24), that the differential pressure valve (91) is arranged in one of the two control pressure lines (23, 24) operating for the respective directions of travel, that the piston (96) can be acted on, via a line (98), by the control pressure in the other control pressure line (23), and that a surface (116 and 117) of the piston slide (93) operating in the direction of action of the spring (111) can be acted on via a line (114) by the regulated pressure in the one control pressure line (24, 25).

11. A drive system according to any one of claims 6 to 10, characterised in that the piston slide (93) is centered by the spring (111) on the adjusting means (112, 123) that adjusts its operating force or position.

12. A drive system according to claim 11, characterised in that the spring (111) is a pressure spring that is tensioned by means of thrust rings (118, 119) between two opposed shoulders (124, 125) of the piston slide (93), the thrust rings (118, 119) being held axially between shoulders (121, 122) of the adjusting means (112, 123).

**Revendications**

1. Dispositif de propulsion avec deux transmissions hydrostatiques (1, 2) actionnées par un même moteur ou par plusieurs moteurs ayant entre eux un rapport constant de leurs vitesses de rotation, chaque transmission présentant un pompe (5, 6) et un moteur hydrostatique (7, 8), le réglage des volumes de refoulement et d'admission des pompes (5, 6) et/ou des moteurs hydrostatiques (7, 8) étant réalisé au moyen de servo-mécanismes hydrauliques de réglage (13, 14) dont les pressions de commande disponibles dans les conduites de pressions de commande (23, 24; 63, 64) sont, à volonté, variables indépendamment l'une de l'autre ou bien conjointement, au moyen de vannes (27) associées à chaque transmission (1, 2) et alimentées par une source auxiliaire de pression (9, 10), ces vannes fournissant les pressions de commande, caractérisé par une vanne réglable à pression différentielle (41; 65; 91) reliée aux conduites de pressions de commande (23, 24, 25; 63, 64) qui corrige au moins une des pressions de commande agissant à la fois sur les servo-mécanismes de réglage (13, 14) en fonction de l'autre pression de commande, en réalisant ainsi, en tenant compte des sources de défauts, une pression différente pour la commande des servo-mécanismes de réglage (13, 14).

2. Dispositif de propulsion selon la revendication 1, caractérisé en ce que la vanne à pression différentielle (41; 65; 91) présente un tiroir à piston (43; 67; 93) sollicité par un ressort (51; 76; 111), et en ce que la force exercée par ce ressort (51; 76; 111) est réglable.

3. Dispositif de propulsion selon la revendication 2, caractérisé en ce qu'une soupape réductrice de pression (26) est disposée entre les conduites de pressions de commande (23, 24, 25), en ce que la vanne à pression différentielle (41) est disposée dans une des deux conduites de pression (23, 24) agissant dans un des sens de marche, en ce qu'une surface active de mesure (47) du tiroir à piston (43) située à l'opposé du sens d'action du ressort (51) est soumise à la pression de commande régnant dans l'autre conduite de pression de commande (23), en ce qu'une surface active (40) du tiroir à piston (43) située dans le sens d'action du ressort (51) est soumise, à travers une conduite (54), à la pression de commande régnant dans une des conduites de pression de commande (24, 25), et en ce que le tiroir à piston (43) présente deux bords de commande (44, 45) pour commander la section de passage d'une conduite de commande (24) et d'une conduite de décharge (50).

4. Dispositif de propulsion selon la revendication 2, caractérisé en ce que la vanne à pression différentielle (65) est constituée par un diviseur de débit ou de pression.

5. Dispositif de propulsion selon la revendication 4, caractérisé en ce que le tiroir à piston (67) de la vanne à pression différentielle (65) présente deux bords de commande (68, 69) sur deux surfaces présentant des directions opposées l'une à l'autre, en ce que ces bords de commande (68, 69) forment, avec deux jonctions d'une conduite de dérivation (73) reliée au circuit de commande (12), des étranglements (74, 75), en ce que chaque conduite de pression de commande (63, 64) est reliée à un étranglement (74, 75), et en ce que chaque conduite de pression de commande (63, 64) est reliée à une des deux chambres de travail (78, 80) frontales du cylindre contenant le tiroir à piston (67), ces chambres agissant en sens opposés l'une à l'autre.

6. Dispositif de propulsion selon une des revendications 2 à 5, caractérisé en ce qu'est associé à la vanne à pression différentielle (91) un piston (96) soumis à la pression régnant dans au moins une des conduites de pression de commande (23), ce piston agissant sur le tiroir à piston (93) dans le sens opposé au ressort (111) par l'intermédiaire d'un mécanisme de transmission réglable (102).

7. Dispositif de propulsion selon la revendication 6, caractérisé en ce que le mécanisme de transmission est un mécanisme à levier dont le point d'articulation (103) est réglable.

8. Dispositif de propulsion selon la revendication 7, caractérisé en ce que le mécanisme de transmission est un levier (102) à deux bras, dont un bras (101) est en prise avec le piston (96) et l'autre bras (102) est en prise avec le tiroir à piston (93).

9. Dispositif de propulsion selon la revendication 7 ou 8, caractérisé en ce que le mécanisme de transmission est articulé sur un excentrique (109) d'un arbre (110) qu'on peut faire tourner.

10. Dispositif de propulsion selon une des revendications 6 à 9, caractérisé en ce qu'une soupape réductrice de pression (26) est disposée entre les conduites de pressions de commande (23, 24), en ce que la vanne à pression différentielle (91) est disposée dans une des deux conduites de pressions de commande (23, 24) agissant dans un sens de marche donné, en ce que le piston (96) est soumis, à travers une conduite (98) à la pression de commande régnant dans l'autre conduite de pression de commande (23), et en ce qu'une surface (116 et 117) du tiroir à piston (93), surface agissant dans le sens d'action du ressort (111), est susceptible d'être soumise, à travers une conduite (114), à la pression régulée régnant dans la première conduite de pression de commande (24, 25).

11. Dispositif de propulsion selon une des revendications 6 à 10, caractérisé en ce que le tiroir à piston (93) est centré en position médiane par le ressort (111), par rapport à la force exercée par ce ressort et par rapport à l'élément de réglage (112, 123) réglant la position de ce ressort.

12. Dispositif de propulsion selon la revendication 11, caractérisé en ce que le ressort (111) est un ressort à compression qui est comprimé au moyen de bagues coulissantes (118, 119) entre deux épaulements (124, 125) du tiroir à piston (93) opposés l'un à l'autre, les bagues coulissantes (118, 119) étant tenues axialement entre des épaulements (121, 122) de l'élément de réglage (112, 123).

EP 0 217 367 B1

FIG. 1

FIG. 4

FIG. 2

FIG. 3

**FIG. 5**

FIG. 6

FIG. 7

E 99 96 94,95 97 98 114 91 121 92 122 24,25

101
103,110
104
109
102
100
105

123

114

112

24 93 108 116 124 111 125 113
113 118 119 117

FIG. 8